**Europäisches Patentamt**

**European Patent Office**

**Office européen des brevets**

(11) Publication number: **0 064 960**
**B1**

(12) **EUROPEAN PATENT SPECIFICATION**

(45) Date of publication of patent specification: **17.09.86**

(21) Application number: **82850089.2**

(22) Date of filing: **28.04.82**

(51) Int. Cl.⁴: **C 02 F 3/04, C 02 F 3/12,**
**B 01 D 53/14, B 01 D 47/06**

(54) A plant for purifying contaminated air.

(30) Priority: **08.05.81 SE 8102901**

(43) Date of publication of application:
**17.11.82 Bulletin 82/46**

(45) Publication of the grant of the patent:
**17.09.86 Bulletin 86/38**

(84) Designated Contracting States:
**AT BE CH DE FR GB IT LI NL SE**

(56) References cited:
**DE-A-2 547 675**
**FR-A-2 290 938**
**GB-A- 475 354**
**GB-A-2 013 646**
**US-A-2 141 979**
**US-A-3 853 764**

(73) Proprietor: **Fläkt Aktiebolag**
**Sickla Allé 13**
**S-131 34 Nacka (SE)**

(72) Inventor: **Herrlander, Bo**
**Hagadalsvägen 9**
**S-352 46 Växjö (SE)**

(74) Representative: **Bergvall, Sven et al**
**Bergenstrahle & Lindvall AB Sankt Paulsgatan 1**
**S-116 47 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a plant for spray painting and purifying contaminated air, comprising a spray booth through which the contaminated air is caused to pass in intimate contact with a purified flowing liquid, whereby the contaminants are transferred from the air and a liquid having suspended and/or dissolved contamination in the form of solvents and paint particles is obtained as defined in the preamble of claim 1.

It is previously well known, for instance in spray painting to utilize a spray booth, in which the object to be painted is placed so that the excess paint will accompany an air stream through the booth which is brought into intimate contact with the spray booth liquid, whereon pigment and solvent are absorbed by said liquid, thus purifying the air. The liquid flowing through the spray booth is usually water which circulates in a closed system and since the hydrocarbon-based solvents present in paint have limited solubility in water its saturation limit will very soon be reached, and as a result thereof the hydrocarbon concentration in the air which has passed through the spray booth will be unacceptably high. This means of course that persons in the room where spray painting is in progress will be exposed to health hazards. The authorities have observed the problem and in the United States for instance, hydrocarbon emission regulations have been imposed by the U.S. federal state and local governements. Inter alia, these emission regulations require that in painting with specific laquer topcoat paints there must be a hydrocarbon emission reduction of approximately 80%. This goal can only be reached by combining different measures so as to give the desired effect. Such measure include using other and harmless paints, introducing changes into the painting process, e.g. utilizing electrostatic painting and employing hydrocarbon emission abatement systems after the painting station. Large and expensive abatement systems have been installed to take care of the solvent-contaminated air from the spray booth by passing it through an activated carbon purifying plant or some kind of scrubber in which the solvents from the spray booth are washed out. According to another type of air purification, the solvent-contaminated air is passed through an incineration oven or some other kind of heating arrangement where the poisonous airborne hydrocarbon compounds are burnt.

In the prior art there are examples, e.g. as described in DE—B 25 47 675, of plants for purifying air which employ a scrubber, where the circulating scrubbing liquid is passed through a biological purification step. To use such a plant for purifying the exhaust air from a paint booth will be extremely costly, however, since the plant must be dimensioned for the great air quantities which flow through a spray booth, and in practice the problem has therefore not been solved in this way, due to the high costs involved.

Consequently, it has hitherto not been possible to solve both the economical and the practical problems which are related to the hydrocarbon emission from spray booth air, and those systems which have proved to be practical solutions have not met the minimum emission regulations which the authorities have imposed and which shall already be met by the middle of this decade.

The object of the plant according to the present invention is to provide a practical solution to purifying spray booth air which meets the demands for a good working environment as well as being economical enough to use in the manufacture of painted products at a price which is commercially viable.

This object is realized according to the invention substantially in that first transporting means are provided for continuously drawing a portion of said liquid flowing through the closed spray booth circulation circuit therefrom and transferring it to the biological reactor and that second transporting means are provided to return essentially the same quantity of purified liquid to the closed spray booth circulation circuit.

In a suitable embodiment of a plant according to the invention said first and second transporting means are connected to the closed spray booth circulation circuit to form a first closed circulation circuit comprising said biological reactor and said separator and wherein third transporting means are provided for connecting an output of said separator with an input of said biological reactor to form a second closed circulation circuit.

In another embodiment of the invention, the container and the separator form a combined unit connected in the closed spray booth circulation circuit, and wherein said first transporting means are connecting an output of said combined unit and an input of said biological reactor, and wherein said second transporting means are connecting an output of said biological reactor with an input of said combined unit to the biological reactor, to form a closed circulation circuit.

Some embodiments of the invention will now be described by way of example, while referring to the accompanying drawings on which

Fig. 1 illustrates a plant for spray painting where only part of the contaminated water in the closed circuit of the spray booth is supplied to the biological step,

Fig. 2 illlustrates an alternative embodiment of a plant for spray painting in which the container and the separator form a single unit,

Fig. 3 illustrates in more detail the spray booth intended to form a part of the plant according to Fig. 1,

Fig. 4 is a detail of a biological tower forming part of a plant according to Fig. 1 or Fig. 2.

Figs. 5 and 6 are views of a microflotation unit from above and laterally, respectively, forming part of a plant according to Fig. 1 or Fig. 2.

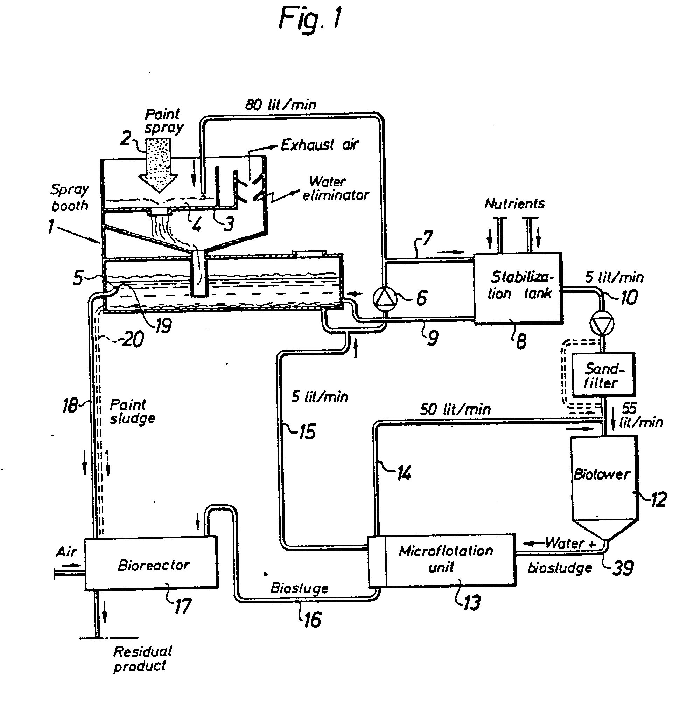

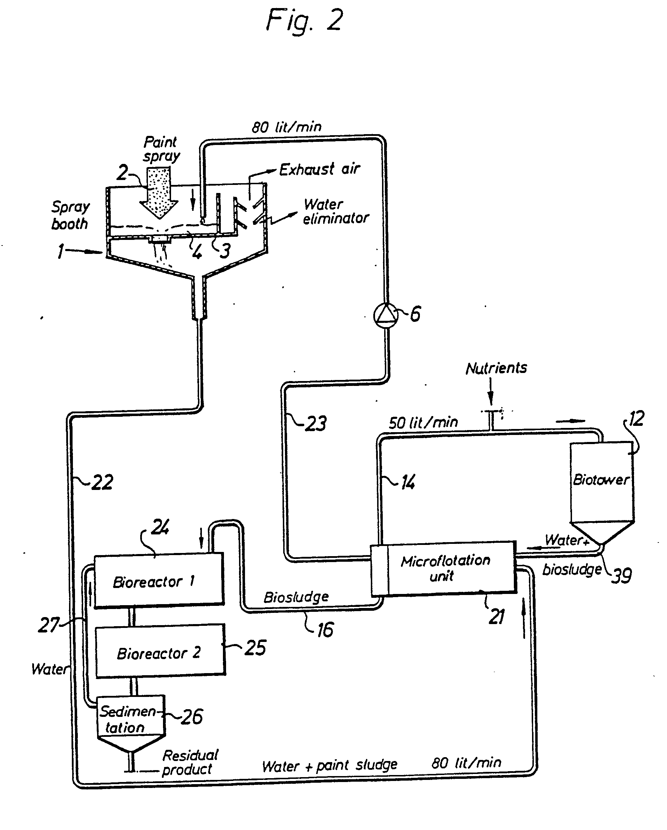

The plant according to Fig. 1 includes a spray booth 1 intended for use in spray painting objects in a way which is described more in detail in connection with Fig. 2. Fans (not shown) or other air pressurizing means generate an air stream through the spray booth, causing the air 2 contaminated with paint particles to enter the upper part 3 of the spray booth, where the air is brought into intimate contact with a liquid 4, which also flows through the spray booth. The liquid is preferably water. The water contaminated thus is then collected in a container 5, which is arranged in the lower portion of the spray booth, and the water in the container is then recirculated to the upper portion 3 of the spray booth by means generating pressure, such as a pump 6. In accordance with the invention part of the contaminated water circulating through the spray booth is transferred to a biological purification step, the water is thus first taken via a conduit 7 to a stabilization tank 8, where nutrients are added. As known in the art, these nutrients may comprise nitrogen and phosphorous compounds, e.g. ammonium hydroxide ($NH_4OH$) and phosphoric acid. The nutrients are supplied to the stabilization tank batchwise in proportion to the paint concentration in the air. The tank is kept filled and the excess liquid is returned to the container 5 in the spray booth through a conduit 9. A minor flow departs from the tank via a conduit 10 to a sand filter 11. The particles suspended in the water are separated from the solvent-laden water in a sand filter which preferably comprises a pressure chamber which is filled with sand of suitable grain size. The water passes from top to bottom through the filter and two filters are preferably used for alternate connection into the circuit, so that one filter could be in operation, while the other is cleaned by means of water and pressurized air which are caused to flow backwards through the filter. From the filter the liquid flows into a bioreactor, preferably in the form of a biotower. This tower contains a filler material on which the microorganisms are grown. The total efficiency of the tower may be substantially increased by moderating pH-value and temperature, as well as the concentration of the solvents and nutrients. The changes in these influencing factors may be effected in a separation unit coming after the biotower in the closed purification liquid circuit. The separation unit is here made in the form of a microflotation unit 13 receiving water from the bottom of the tower via a conduit 38 and delivering treated water in a separate continuous circulation process via a conduit 14 to the top of the tower. It is of course evident that other reactors could be used instead of a biotower, for instance in the form of a fluidized bed or an activated sludge tank. In the microflotation unit 13 the dead microorganisms are separated from the water coming from the biotower and the cleaned water goes back to the container 5 via a conduit 15. The separated biosludge then flows through a further conduit 16 to another bioreactor 17, to which the paint sludge separated in the container 5 is also supplied through a conduit 18. The bioreactor 17 is in this case an activated sludge tank, which means the air must be supplied to the tank for accomplishing the desired aerobic degradation. The conduit 18 is connected to a surface separator 19 in the container 5, and this separator can also be combined with a bottom separator (not shown) from which the paint sludge is supplied through a conduit 20 to the bioreactor 17. The residual sludge is finally discharged from the bioreactor to a recovery plant. The bioreactor 17 can naturally be in the form of a passive sludge bed such as a digestion tank in which the final degradation or organic material occurs anaerobically.

Fig. 2 shows an alternative embodiment of a spray painting plant where the container 15 and separator 13 according to Fig. 1 are arranged in a single unit 21 which is consequently part of the spray booth liquid circulation circuit and the biological purification step. The contaminated liquid from the spray booth 1 is supplied through conduits 22 directly to the separator 21, which is in the form of a microflotation unit in this embodiment also. The same quantity of liquid taken from the spray booth through conduits 22 is tapped out from the microflotation unit 21 and recirculated to the spray booth 1 through a conduit 23 by means of a pump 6. The microflotation unit 21 and the biotower 12 have a separate liquid circulation circuit, similar to that described in connection with Fig. 1, via conduits 14 and 19, the liquid thus being taken from the separator 21 to the top of the biotower 12 and from its bottom to the separator. The nutrients which are necessary for the biological purification are supplied in this embodiment to the liquid which is recirculated to the top of the biotower. The separator 21 here is consequently given the double function of separating the impurities suspended in the spray booth liquid and also the biosludge coming from the biotower. The biosludge is then transferred via conduit 16 to the bioreactor section. In this plant there are two series-connected bioreactors 24 and 25l both being of the activated sludge type. Water and sludge from the second reactor 25 are supplied to a sedimentation tank 26, from which cleaned water is recirculated to the first reactor 24 via a conduit 27.

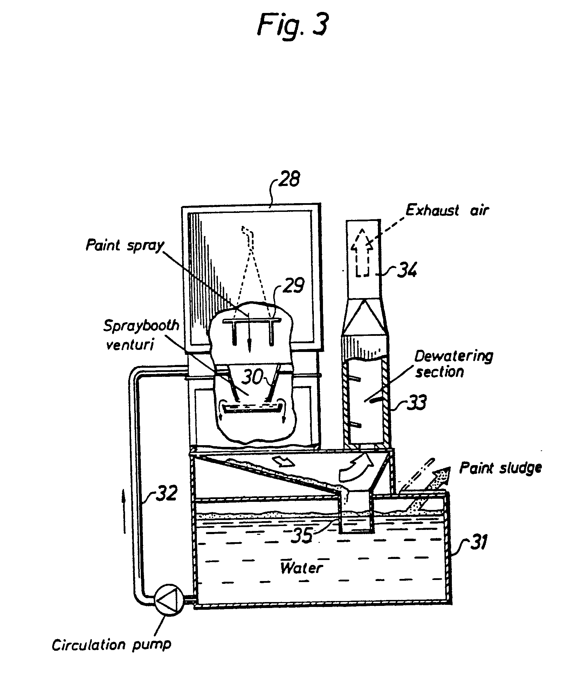

Fig. 3 shows an embodiment of a spray booth for spray painting and having a container for collecting the spray booth liquid, which circulates between the spray booth and the container. The object 29 to be painted is placed in the upper portion 28 of the spray booth and the air contaminated with paint is caused to flow through a venturi 30 in which this air and the liquid are intimately mixed so that paint particles and solvent are transferred from the air to the liquid. The liquid, in this case water, is circulated from the container 31 through the conduit 32 and through the venturi 30. The air flowing into the venturi contains paint particles and gaseous solvent. Due to the intimate contact in the venturi between the liquid and the air, the particles and solvent are transferred from the air and to the liquid, and after the venturi the liquid, now laden with paint particles and solvent is separated from the air in a dewatering section 33 from which the liquid is caused to flow back to the container 31, while the air departs through an exhaust duct 34. The paint sludge in the container 31 floats on the surface where it can easily be removed by means of a skimming device as is indicated in Fig. 1. Gaseous solvent is prevented from being entrained in the air stream from the spray booth by means of a water trap 35.

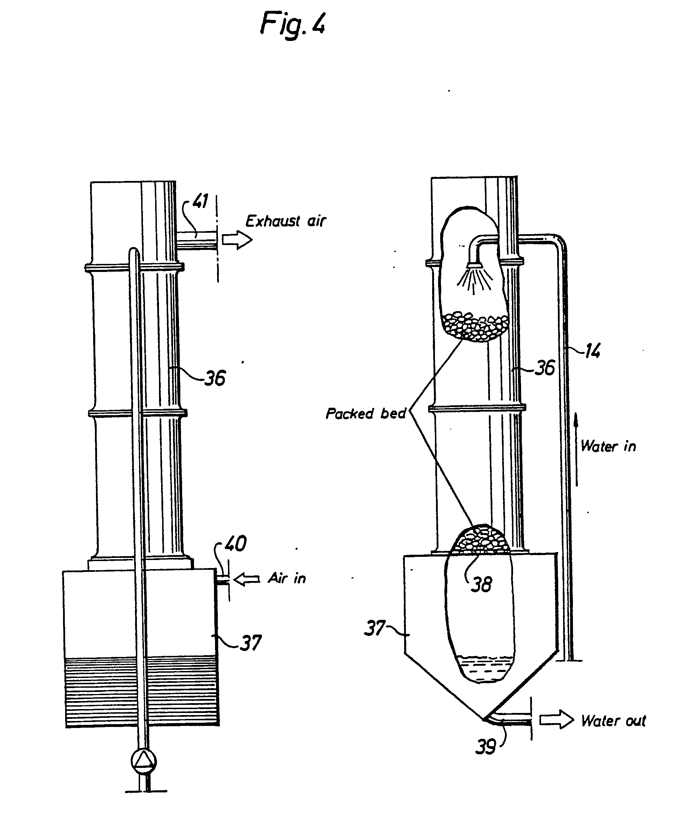

Fig. 4 shows the biotower 6 in two sideviews, one partly sectioned. The tower contains a filling material acting as the matrix for bacterial growth and action. The tower is placed on a settling tank 37 and the filling material is supported by a stainless steel grid 38 arranged in the tank cover. Water is supplied to the top of the biotower through a conduit 14, where it is freely distributed over the packing and during the downward migration of the water the solvent is absorbed and metabolized in the layer of microorganisms covering the packing material. The water is then collected in the tank 37 and is supplied to the microflotation unit through a conduit 39. Air is supplied through a lower duct 40 and is drawn through the tower from bottom to top in counter flow to the water flow and led away through an upper duct 41.

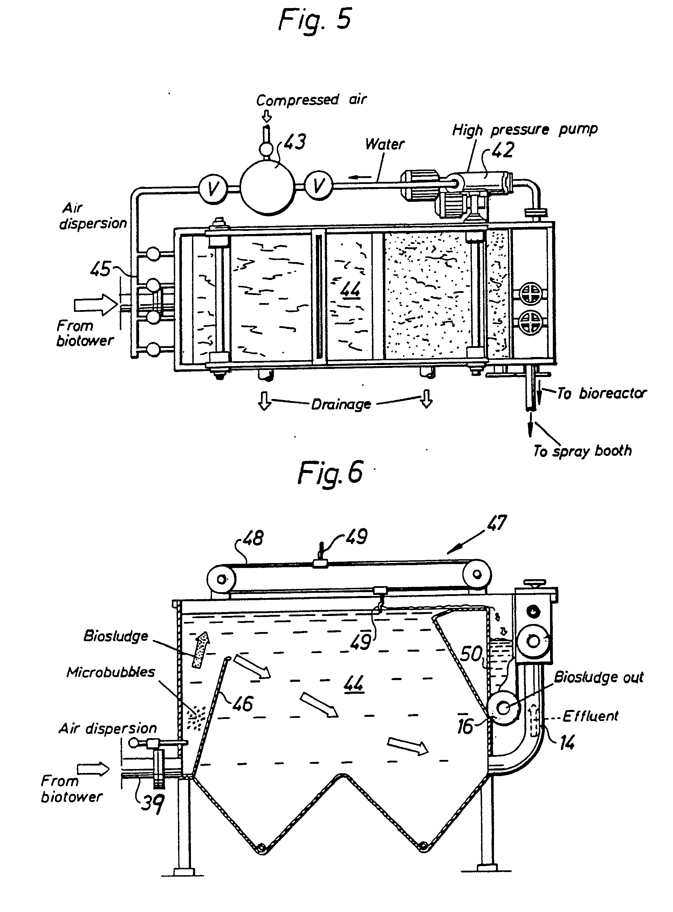

The microflotation unit is shown in Fig. 5 from above and in a sectioned sideview in Fig. 6. In the microflotation unit dead organisms are separated from the water coming from the tank 37 of the biotower 36. A minor portion of the cleaned water is pressurized by means of high-pressure pump 42 and is then saturated with compressed air in a pressure tank 43. At this high pressure the water is capable of dissolving 80—100 ml of air per litre of water. This pressurized water is then expanded in a tank 44 to which the overflow conduit 39 from the biotower is also connected. This process is performed such that the air dispersion is transported through a conduit 45 which also serves to distribute air and introduce it into the lower portion of the expansion tank 44, to which the biosludge from the biotower is supplied via the conduit 39. A baffle plate 46 will force the incoming flow of fluid upwards, in order to mix with the pressurized water expanding in the container, and due to the pressure release microskopic air bubbles are formed which become attached to the suspended solids causing them to float to the surface. The solids, which are dead microorganisms, can be removed by means of a skimmer or a scraping device 47, as shown in Fig. 6, comprising an endless chain 48 with two scraping members 49, for removing the pollutants or biosludge floating on the surface. The biosludge is transferred to a smaller tank 50 located next to the main tank 44, while the cleaned water is recirculated both to the top of the biotower and to the circulation system passing through the spray booth, as indicated in Figs. 1 and 2. The biosludge is then transferred to the bioreactor section via the conduit 16, for final degradation.

Example 1

In a plant according to Fig. 1, water at 80 l/min and air at 0.5 m³/sec are caused to flow through a spray booth which is shown in detail in Fig. 3.

A paint killer TEXO LP 781 (RTM) is introduced into the water circulating through the spray booth 1 in such quantity that the pH-value is about 8. The paint killer makes the paint non-sticky in the water so that it does not stick to the apparatus. The effect of the paint killer decreases at a pH below 8.

The temperature of the spray booth water assumes approximately the wet temperature of the air, in this case about 12°—15°C. The pressure drop over the spray booth venturi is about 130—140 mm water column.

Paint according to Table 1 is sprayed in the booth at a rate of 2—2.5 kg/h for 5—7 hours daily. Of the solvents present in the paint about two thirds by weight are separated such that about one third is absorbed in the spray booth water and another third is trapped in the paint sludge. The paint sludge is removed as required, by skimming the surface in the tank as indicated in Fig. 1. A partial flow of about 5 l/minute of spray booth water is supplied to the biotower 12 via the stabilization tank 8 and the sand filter 11. Nutrients, substantially nitrogen in the form of ammonium hydroxide and phosphor in the form of phosphoric acid are added to the stabilization tank 8. Ammonium hydroxide is added to the extent of 60 ml per kg sprayed paint and phosphoric acid to the extent of 4 ml per kg sprayed paint.

The biotower 12 is shown in detail in Fig. 4 and has a filter of the type known as "Norton Actifil 90" (RTM). A biomass consisting of a bacteria culture grows on the filter. This culture was taken from municiple sewage plant and the species of the microorganisms grown on the filler are apparent from Table 2. The microorganisms collected from the sewage plant have to become aclimatized to their new environment before any considerable biodegradation will occur. Water was distributed over the filler to an amount of about 50—55 litres/min. The water was then collected in the bottom of the tower together with the biosludge removed from the filler material. Ambient air was sucked through the tower from the bottom to the top to oxygenate the water and the microorganisms. The solvents absorbed in the spray booth water are degraded in the biotower. The degradation releases heat which makes the temperature in the biotower water some degrees higher than that in the spray booth. Suitable pH-values in the biotower are 6—9, which means that in this experiment the spray booth water had correct pH. If this were not the case the pH-value could have been adjusted by adding sulphuric acid or caustic soda.

The water with biosludge from the biotower is supplied to a microflotation unit 13 which will be seen in detail in Figs. 5 and 6, where biosludge is separated whereafter the water is pumped to the top of the tower 12. The microflotation unit is of the "dissolved air" type, i.e. a minor portion of the cleaned water is pressurized to 4—6 bar by compressed air in a tank. The pressurized water is mixed with water coming into the flotation plant. The sudden pressure decrease of the previously pressurized water creates microscopic air bubbles which adhere to the suspended solids, i.e. dead microorganisms which then float to the surface where they are skimmed off at intervals and collected in a special tank included in the plant.

The same amount of water, 5 litres/min, which is supplied to the biotower 12 is fed back to the spray booth 1 from the microflotation unit 13.

Water evaporates from the spray booth as well as from the biotower and this loss is covered by a daily addition of about 120—130 litres of water. The water system contains about 4000 litres, in total, with the spray booth containing about 800 litres.

During spray painting the concentration of solvent in the water will increase and after the spraying operation it will decrease to its initial values as a result of the biological degradation in the bioreactor.

The solvent concentration is most easily measured with a TOC-instrument (TOC=Total Organic Carbon) and in this case a Beckman 915 TOC is used.

The conclusion is that for a quantity of about 12—13 kg paint sprayed per day about 6 kg solvent will be separated, and therefore 3 kg per 24 hours will be degradated in the bioreactor.

Example 2

In a plant according to Fig. 2 the water from the spray booth is fed directly into a microflotation plant as shown in detail in Figs. 5 and 6. Cleaned water from the microflotation unit 13 is re-circulated to the spray booth 1. Water from the biotower 12 is also supplied to the microflotation plant and clean water from the plant is recirculated to the top of said biotower. Paint sludge and biosludge are consequently separated simultaneously. The sludge is treated in two series-connected bioreactors 24 and 25.

Of the 12—13 kgs of paint sprayed during a day according to Example 1 about 4—5 kgs of dry substance forms together with about 3 kgs of solvent contained in it a sludge cake with about 50% water contant. This sludge cake is transferred to the two series connected bioreactors 24 and 25 which are of the activated sludge type. The first bioreactor comprises a container with a volume of about 300 litres. The container is ventilated with air at a pressure of about 1 bar. The ventilation causes mixing and oxygenation. The concentration of the paint sludge will be decreased by the addition of water to about 5% dry substance.

Nitrogen in the form of ammonia and phosphorus in the form of phosphoric acid are also added. This is of course not necessary if sufficient nutrients are supplied in some other way.

Sludge and water are transferred to the second reactor via an overflow. The second reactor has a volume of about 250 litres and is likewise ventilated. Water and sludge from this second reactor are finally led to a sedimentation tank 26. A mixture of paint sludge and biosludge to a quantity of about 3.2—3.6 kg per 24 hours with and about 50% water content comes from the bottom of the sedimentation tank.

Cleaned water from the overflow is recirculated to the first reactor to decrease the concentration of influent sludge.

The biodegradation occurs with the aid of a cultivation described in Example 1. If the spray booth is connected in accordance with Example 1 no further bacterial grafting is necessary since there are bacteria enough in the water. A suitable pH-value is 6—9, which means, that the spray booth water described in Example 1 maintains the right value. The temperature will be about the same as that of the spray booth water.

The conclusion here is that about 3 kg of solvent contained in the paint sludge and part of the paint binder have been broken down.

TABLE 1
Solvent in 27% LDL-laquer
Reduced paint system consisting of 80% by volume of paint 397 YAJ 615 (RTM) and 20% by volume of thinner 38228.

Dry solids content: 32% by weight

| Component | % by volume | % by wt. | Density kg/litre | Solubility in water g/100 ml at 20°C |
|---|---|---|---|---|
| MEK | 3 | 2.8 | 0.805 | 27.0 |
| P-naphtha | 10 | 7.7 | 0.660 | 0.01 |
| VM & P naphtha | 1 | 0.8 | 0.70 | 0.01 |
| Toluene | 6 | 6.1 | 0.867 | 0.05 |
| Cellulose acetate | 1 | 1.1 | 0.975 | 22.0 |
| Mineral spirits (180—210°C) | 41 | 36.8 | 0.77 | 0.01 |
| Solvesso 150 (RTM) | 9 | 9.4 | 0.890 | 0.05 |
| Butyl cellosolve-acetate | 9 | 9.5 | 0.9 | 1.1 |
| DEB-2 | 10 | 12.7 | 1.086 | 4.5 |
| Diethyl phthalate | 10 | 13.1 | 1.123 | insoluble |

TABLE 2

Biotower
Growth on filler material

Good growth of:   Citrobacter freundii
Serratia species
Aeromonas hydrofila

Minor growth of:   Streptococcus faecalis
Yeast fungus

No thermostabile coliform bacterial or stafylococcus discovered.

Biotower water

| Growth of | Concentration (no./ml): |
|---|---|
| Citrobacter freundii | $9 \times 10^5$ |
| Aeromonas hydrofila | $3 \times 10^5$ |
| Serratia species | |
| Stafylococcus aureus | 12 |
| Streptococcus faecalis | 5 |
| Pseudomonas species | 20 |
| Total number of bacteria at 22°C | $4 \times 10^7$ |

**Claims**

1. A plant for spray painting and purifying contaminated air, comprising:

(a) a spray booth wherein contaminated air is caused to pass through in intimate contact with a purified flowing liquid, whereby the contaminants are transferred from the air and a liquid having suspended and/or dissolved contaminations in the form of solvents and paint particles is obtained:

(b) a container in which the contaminated liquid is collected and from which said liquid is recirculated to the spray booth by means of a closed spray booth circulation circuit; and

(c) a biological purification system connected into the closed spray booth circulation circuit, wherein the paint particles and at least a portion of the suspended and/or dissolved solvents are degraded and separated from said flowing liquid; said system comprising:

(i) at least one biological reactor wherein the biological sludge is produced; and

(ii) a separator receiving the biological sludge from the reactor wherein said sludge is separated from the purified liquid;

characterized in that first transporting means are provided for continuously drawing a portion of said liquid flowing through the closed spray booth circulation circuit therefrom and transferring it to the biological reactor and that second transporting means are provided to return essentially the same quantity of purified liquid to the closed spray booth circulation circuit.

2. The plant of claim 1, characterized in that said first and second transporting means are connected to the closed spray booth circulation circuit to form a first closed circulation circuit comprising said biological reactor and said separator and wherein third transporting means are provided for connecting an output of said separator with an input of said biological reactor to form a second closed circulation circuit.

3. The plant of claim 1, characterized in that the container and the separator form a combined unit connected in the closed spray booth circulation circuit, and wherein said first transporting means are connecting an output of said combined unit and an input of said biological reactor, and wherein said second transporting means are connecting an output of said biological reactor with an input of said combined unit, to form a closed circulation circuit.

4. The plant of claim 1, characterized in that the container where contaminated liquid is collected, further comprises means for separating the liquid from the contaminants which are then transferred to the biological purification system.

5. The plant of claim 1, characterized in that the biological reactor is a biotower, and the separator is a flotation unit which are interconnected by a separator liquid circulation circuit.

6. The plant of claim 1, characterized in that the air is contaminated with an aqueous solution or suspension of a substance selected from the group consisting of solvents, binding agents and paint pigments.

7. The plant of claim 1, characterized in

(d) a second biological reactor receiving the separated sludge from the separator wherein further biological degradation occurs and a residual product is obtained and separated from the purified liquid.

**Patentansprüche**

1. Anlage zum Farbspritzen und zum Reinigen verunreinigter Luft, mit

a) einer Spritzkammer, durch welche verunreinigte Luft in innigem Kontakt mit einer gereinigten strömenden Flüssigkeit hindurch geleitet wird, so daß die Verunreinigungen aus der Luft übertragen werden und eine Flüssigkeit mit suspendierten und/oder gelösten Verunreinigungen in Form von Lösungsmitteln und Farbteilchen erhalten wird;

b) einem Behälter, in welchem die verunreinigte Flüssigkeit gesammelt wird und aus welchem diese Flüssigkeit zur Spritzkammer über einen geschlossenen Spritzkammer-Zirkulationskreis rezirkuliert wird; und

c) einem in den geschlossenen Spritzkammer-Zirkulationskreis eingeschalteten biologischen Reinigungssystem, in welchem die Farbteilchen und zumindest ein Teil der suspendierten und/oder gelösten Lösungsmittel abgebaut und von der strömenden Flüssigkeit getrennt werden; wobei das System aufweist:

i) zumindest einen biologischen Reaktor, in welchem biologischer Schlamm erzeugt wird; und

ii) einen zur Aufnahme des biologischen Schlammes aus dem Reaktor dienenden Separator, in welchem der Schlamm von der gereinigten Flüssigkeit getrennt wird;

dadurch gekennzeichnet, daß erste Transportmittel vorgesehen sind, um einen Teil der durch den geschlossenen Spritzkammer-Zirkulationskreis strömenden Flüssigkeit kontinuierlich aus diesem abzuziehen und in den biologischen Reaktor überzuführen, und daß zweite Transportmittel vorgesehen sind, um im wesentlichen die gleiche Menge an gereinigter Flüssigkeit in den geschlossenen Spritzkammer-Zirkulationskreis zurückzuführen.

2. Anlage nach Anspruch 1, dadurch gekennzeichnet, daß die ersten und die zweiten Transportmittel an den geschlossenen Spritzkammer-Zirkulationskreis zur Bildung eines ersten geschlossenen Zirkulationskreises angeschlossen sind, der den biologischen Reaktor und den Separator aufweist, und daß dritte Transportmittel vorgesehen sind, welche einen Ausgang des Separators mit einem Eingang des biologischen Reaktors verbinden, um einen zweiten geschlossenen Zirkulationskreis zu bilden.

3. Anlage nach Anspruch 1, dadurch gekennzeichnet, daß der Behälter und der Separator eine kombinierte Einheit bilden, die in den geschlossenen Spritzkammer-Zirkulationskreis eingeschaltet ist, daß die ersten Transportmittel einen Ausgang der kombinierten Einheit und einen Eingang des biologischen Reaktors miteinander verbinden, und daß die zweiten Transportmittel einen Ausgang des biologischen Reaktors mit einem Eingang der kombinierten Einheit verbinden, um einen geschlossenen Zirkulationskreis zu bilden.

4. Anlage nach Anspruch 1, dadurch gekennzeichnet, daß der Behälter, in welchem die verunreinigte Flüssigkeit gesammelt wird, ferner eine Einrichtung zum Trennen der Flüssigkeit von den Verunreinigungen aufweist, die dann zum biologischen Reinigungssystem übergeführt werden.

5. Anlage nach Anspruch 1, dadurch gekennzeichnet, daß der biologische Reaktor ein Bioturm ist und daß der Separator eine Flotationseinheit ist, die miteinander über einen getrennten Flüssigkeitzzirkulationskreis verbunden sind.

6. Anlage nach Anspruch 1, dadurch gekennzeichnet, daß die Luft mit einer wässrigen Lösung oder einer Suspension einer Substanz aus der Gruppe der Lösungsmittel, Bindemittel und Farbpigmente verunreinigt ist.

7. Anlage nach Anspruch 1, dadurch gekennzeichnet, daß

d) ein zweiter biologischer Reaktor vorgesehen ist, der den im Separator abgesonderten Schlamm aufnimmt und in welchem ein weiterer biologischer Abbau stattfindet und ein Restprodukt erhalten und von der gereinigten Flüssigkeit abgesondert wird.

**Revendications**

1. Installation pour la peinture par pulvérisation et la purification d'air contaminé, comprenant:

(a) une cabine de pulvérisation dans laquelle on fait passer de l'air contaminé en contact intime avec un liquide purifié en écoulement, de sorte que les impuretés sont transférées de l'air et que l'on obtient un liquide ayant des impuretés en suspension et/ou en solution sous la forme de solvants et de particules de peinture;

(b) un récipient dans lequel le liquide contaminé est recueilli et duquel ce liquide est recyclé à la cabine de pulvérisation au moyen d'un circuit fermé de circulation de cabine de pulvérisation; et

(c) un système de purification biologique, branché dans le circuit de circulation de cabine de pulvérisation et dans lequel les particules de peinture et au moins une partie des solvants en suspension et/ou dissous sont dégradés et séparés du liquide en écoulement, ce système comprenant:

(i) au moins un réacteur biologique dans lequel la boue biologique est produite, et

(ii) un séparateur recevant la boue biologique du réacteur et dans lequel la boue est séparée du liquide purifié;

caractérisé par le fait que des premiers moyens de transport sont prévus pour retirer de façon continue du circuit de circulation de cabine de pulvérisation une partie du liquide s'écoulant à travers celui-ci et la transférer au réacteur biologique et que des deuxièmes moyens de transport sont prévus pour ramener pratiquement la même quantité de liquide purifié au circuit fermé de circulation de cabine de pulvérisation.

2. Installation selon la revendication 1, caractérisé par le fait que les premiers et deuxièmes moyens de transport sont reliés au circuit fermé de circulation de cabine de pulvérisation pour former un premier circuit fermé de circulation comprenant le réacteur biologique et le séparateur et dans laquelle des troisièmes moyens de transport sont prévus pour relier une sortie du séparateur à une entrée du réacteur biologique pour former un deuxième circuit fermé de circulation.

3. Installation selon la revendication 1, caractérisé par le fait que le récipient et le séparateur forment une unité combinée reliée au circuit fermé de circulation de cabine de pulvérisation et dans laquelle les premiers moyens de transport relient une sortie de cette unité combinée et une entrée du réacteur biologique et dans laquelle les deuxièmes moyens de transport relient une sortie du réacteur biologique avec une entrée de l'unité combinée, pour former un circuit fermé de circulation.

4. Installation selon la revendication 1, caractérisé par le fait que le récipient où est recueilli du liquide contaminé comprend en outre des moyens pour séparer le liquide des impuretés qui sont alors transférées au système de purification biologique.

5. Installation selon la revendication 1, caractérisé par le fait que le réacteur biologique est une biotour et le séparateur est une unité de flottation qui sont reliés entre eux par un circuit séparé de circulation de liquide.

6. Installation selon la revendication 1, caractérisé par le fait que l'air est contaminé par une solution ou suspension aqueuse d'une substance choisie dans le groupe formé des solvants, des liants et des pigments pour peintures.

7. Installation selon la revendication 1, caractérisée par

(d) un deuxième réacteur biologique recevant du séparateur la boue séparée et dans lequel s'effectue une nouvelle dégradation biologique et un produit résiduel est obtenu et séparé du liquide purifié.

## Fig. 1

## Fig. 2

# 0 064 960

## Fig. 3

- 28
- Paint spray
- 29
- Spraybooth venturi
- 30
- Exhaust air
- 34
- Dewatering section
- 33
- 32
- 35
- 31
- Water
- Paint sludge
- Circulation pump

3

# Fig. 4

41

Exhaust air

36

14

Packed bed

36

Water in

40

Air in

38

37

37

39

Water out

## Fig. 5

Compressed air

43

Water

High pressure pump

42

Air dispersion

45

From biotower

44

V    V

To bioreactor

To spray booth

Drainage

## Fig. 6

48    49    47

Biosludge

Microbubbles

Air dispersion

From biotower

39

44

49

49

50

16

Biosludge out

Effluent

14